# FASCICULE DE BREVET EUROPEEN

(11) **EP 4 502 623 B1**
(45) Date de publication et mention de la délivrance du brevet: **02.12.2026**
(21) Numéro de dépôt: 24186711.8
(22) Date de dépôt: 05.07.2024
(51) Int. Cl.: G01P 15/08, G01C 19/58

(54) **CAPTEUR À ATOMES FROIDS DE TYPE ACCÉLÉROMÈTRE À BIAIS CORRIGÉ**
KORRIGIERTER BESCHLEUNIGUNGSMESSER-KALTATOMSENSOR
COLD ATOM SENSOR OF CORRECTED BIAS ACCELEROMETER TYPE

(30) Priorité: 03.08.2023 FR 2308408
(43) Date de publication de la demande: 05.02.2025
(73) Titulaire: THALES, 92190 Meudon (FR)
(72) Inventeur: WIRTSCHAFTER, Benjamin, 91767 Palaiseau (FR); DUPONT-NIVET, Matthieu, 91767 Palaiseau (FR); HELLO, Soizic, 86100 Châtellerault (FR)
(74) Mandataire: Atout PI Laplace

(56) Documents cités:
- EP-A1- 4 102 182
- US-A1- 2016 116 302
- US-A1- 2023 178 262

## Description

### DOMAINE DE L'INVENTION

La présente invention se situe dans le domaine des capteurs inertiels et plus spécifiquement des capteurs inertiels interférométriques à atomes froids intégrés sur une puce atomique. Plus particulièrement l'invention concerne des capteurs à atomes froids sur puce atomique de type accéléromètre utilisant des champs microondes pour la séparation spatiale des deux nuages d'atomes selon deux états internes, utilisés lors de la mesure du paramètre inertiel accélération.

### ETAT DE LA TECHNIQUE

De manière générale, les capteurs inertiels sont des dispositifs permettant de mesurer des paramètres physiques liés au mouvement comme des accélérations ou des vitesses angulaires, qui joints à une horloge permettent de se repérer dans l'espace. Un dispositif mesurant accélération et vitesse de rotation porte le nom de centrale inertielle ou unité de mesure inertielle (UMI).

La technologie d'interférométrie avec des atomes froids sur puce permet d'effectuer ce type de mesures inertielles, et tend à démontrer une compacité et des performances suffisantes pour son utilisation dans des domaines embarqués.

Le fonctionnement de l'accéléromètre à atomes froids repose sur l'interférométrie, et la mesure de la différence de phase de l'interféromètre permet de remonter à une mesure l'accélération.

Un interféromètre à atomes froids fait interférer deux états électroniques, dénommé premier état interne |a> et deuxième état interne |b>, d'un atome, tel que du rubidium 87, dans une séquence de type Ramsey. Une séquence d'interféromètre de type Ramsey mesure une phase φ accumulée lors de la mise en œuvre de la séquence, à partir d'une mesure d'au moins une population d'un état choisi |a> ou |b> (préférentiellement une mesure des deux populations pour plus de précision).

Pour rendre cet interféromètre sensible aux accélérations, les deux états doivent tous deux parcourir une trajectoire rectiligne en aller-retour en partant d'un même point de départ DP, les deux trajectoires et le point de départ étant alignés selon une droite Dr. Ainsi on ajoute dans la différence d'énergie entre les deux états un terme dépendant de la différence d'énergie potentiel d'accélération entre les positions des deux états |a> et |b> et donc la phase de l'interféromètre dépend de l'accélération.

On rappelle ci-dessous brièvement le principe de fonctionnement de la mesure d'une accélération par interférométrie, basé sur une séquence de Ramsey de type horloge, où la phase de l'interféromètre à l'issue de la séquence est proportionnelle à la différence d'énergie des deux états de l'interféromètre.

Dans le cas d'une horloge, la phase de l'interféromètre est donnée par :
${φ}_{clock} = {φ}_{a} - {φ}_{b} = \left(ω-{ω}_{ab}\right) {T}_{R}$

Avec :
φₐ est la phase des atomes dans l'état la>, et φ_{b} celle des atomes dans l'état b>,
   ${ω}_{ab} = {ω}_{0 a} - {ω}_{0 b}$
*ℏω*_{0*a*} est l'énergie de l'état |a> et *ℏω*_{0*b*} est l'énergie de l'état |b>
ω_{ab} est la pulsation correspondant à la différence en énergie entre les états |a> et |b>,
ω est la pulsation de l'oscillateur local,
*T_{R}* est la durée de libre évolution (temps de Ramsey).

Si pendant cette séquence, on fait en sorte que les atomes dans l'état |a> et ceux dans l'état |b> décrivent chacun une trajectoire rectiligne en aller-retour telle que décrite précédemment, un terme de déphasage sensible à l'accélération selon la droite Dr apparait dû la différence d'énergie potentiel d'accélération entre les positions des deux états |a> et |b> : l'horloge devient un accéléromètre.

Si la séparation se fait selon l'axe des X (droite Dr selon X), et qu'une accélération *ac* est présente durant la durée *Tₛₑₚ* pendant laquelle les états sont séparés, alors un déphasage supplémentaire apparait en sortie de l'interféromètre :
${φ}_{acc} = {φ}_{a} - {φ}_{b} = \frac{m}{ℏ} {\int }_{0}^{{T}_{sep}} ac . \left({x}_{a}\left(t\right)-{x}_{b}\left(t\right)\right) dt$

Avec :
xₐ(t) est la position de l'état |a> le long de la droite Dr et x_{b}(t) est la position de l'état |b> le long de la droite Dr,
m est la masse d'un atome et *ℏ* est la constant de Planck réduite.

En effet, les niveaux d'énergies des deux états de l'interféromètre ont été déplacés en énergie. Ce déplacement des niveaux énergétiques est dû au à la séparation spatiale des deux états ; de par leur séparation spatiale, les deux états ne se trouvent plus au même niveau d'énergie potentielle d'accélération.

Pour simplifier l'équation, on considère des durées de séparation et de recombinaison négligeables devant la durée où la séparation est maintenue (*Tₛₑₚ* ≈ *T_{R}*), *xₐ et x_{b}* ne sont donc plus fonction du temps et on peut réécrire l'équation précédente sous la forme :
${φ}_{acc} = \frac{m . ac . Δ x}{ℏ} {T}_{R} , avec Δ x = {x}_{a} - {x}_{b}$

La phase totale en sortie de l'interféromètre est donc :
${φ}_{tot} = {φ}_{clock} + {φ}_{acc} = \left\{ω-\left({ω}_{ab}+\frac{m . ac . Δ x}{ℏ}\right)\right\} {T}_{R}$ (1)

La connaissance de cette phase *φₜₒₜ* ainsi que des autres grandeurs et paramètres de la formule (1) permet de remonter à l'accélération selon l'axe X.

On rappelle ci-dessous le principe de fonctionnement d'un accéléromètre à atomes ultrafroids à base de puce atomique, qui permet de générer les nuages d'atomes ultrafroids et les trajectoires permettant la mise en œuvre de la mesure de l'accélération via la phase telle que décrite ci-dessus.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

Le principe est de réaliser deux trajectoires en aller-retour rectilignes et alignées parcourues respectivement par les deux nuages d'atomes piégés magnétiquement. Le déplacement du piège magnétique selon les trajectoires est réalisé par des fils/éléments conducteurs et des guides microondes disposés sur et dans la puce atomique. Par example, le document EP4102182A1 décrit un gyroscope à atomes ultrafroids sur puce utilisant des pièges magnétiques et des guides d'ondes micro-ondes. Il emploie un capteur unique mais les nuages d'atomes peuvent être guidés le long de boucles non plane grâce à des guides d'ondes supplémentaires, et ainsi accumuler des contributions de phase provenant de directions autres que l'orthogonale au plan de la puce. Une séquence de telles boucles interférométriques permet de mesurer la vitesse de rotation autour de trois axes.

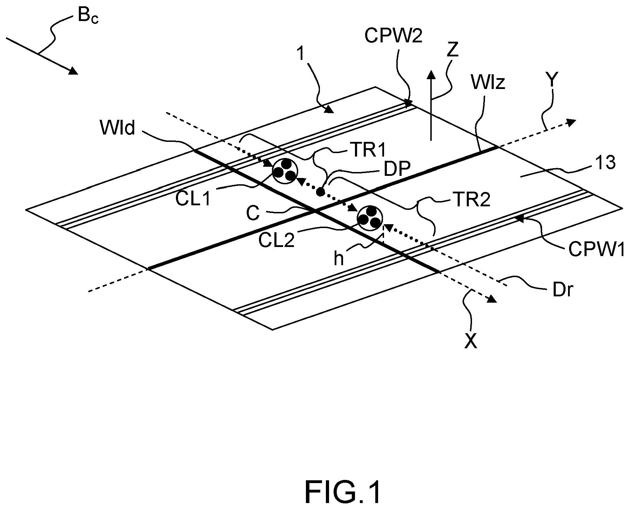

Un exemple de puce atomique est illustré figure 1.

La surface de la puce définit un plan XY ou plan de mesure 13, normal à un axe Z.

La puce 1 comprend des moyens adaptés à générer un premier piège à atomes ultrafroids T1 et un deuxième piège à atomes ultrafroids T2, un piège permettant d'immobiliser un nuage d'atomes ultrafroids dans un état interne différent de l'autre piège, à une distance prédéterminée h du plan de mesure 13. Par exemple le piège T1 comprend les atomes dans le niveau électronique ou état |a> (nuage CL1) et le piège T2 comprend des atomes dans l'état |b> (nuage CL2). Les niveaux |a> et |b> sont espacés d'une fréquence ω_{ab}/2π. Par exemple dans le cas du rubidium 87 il s'agit des deux niveaux hyperfins |F=1,m-_{F}=-1> et |F=2,m-_{F}=1 >, espacés d'environ 6,8 GHz.

Ces moyens permettent également de déplacer les nuages selon les trajectoires TR1 et TR2 localisée dans un plan parallèle au plan de mesure 13, à une hauteur h de ce plan, tel qu'illustré figure 1. Ces moyens sont constitués de guides d'onde et de fils conducteurs.

Les guides d'onde CPW1 et CPW2 sont adaptés à la propagation de micro-ondes à des pulsations ω_{b} et ωₐ. Les guides d'onde sont disposés symétriquement par rapport à un axe Y du plan de mesure, préférentiellement parallèles. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de micro fabrication par dépôt ou par gravure. On peut, par exemple, réaliser une ligne à microruban.

Les fils conducteurs intégrés à la puce 1 sont adaptés à être traversés par des courants continus. Les fils conducteurs sont répartis par exemple en un fil conducteur WIz selon un axe de symétrie Y perpendiculaire à X et compris dans le plan de mesure 13, et en un fil conducteur WId, parallèle à l'axe X. Les fils sont agencés de manière à définir un point de croisement C (croisement entre WIz et Wld) localisé sur l'axe Y.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. Le capteur comporte un dispositif de génération d'atomes ultrafroids qui comprend :
- un émetteur d'atomes *(dispenser* en anglais), par exemple réalisé par un filament chauffant délivrant une vapeur de rubidium ;
- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

Le capteur comprend également une source de champ magnétique, extérieure à la puce 1. Elle permet d'imposer un champ magnétique homogène et stationnaire Bc sur une épaisseur au moins de l'ordre d'une hauteur h au-dessus du plan de mesure 13. Avantageusement, la direction du champ magnétique homogène est parallèle au plan de mesure.

Sur la figure 1 les trajectoires TR1 et TR2 en pointillés illustrent respectivement la trajectoire des nuages d'atomes ultrafroids CL1 et CL2. Une distance h sépare le plan des trajectoires et le plan de mesure 13 de la puce. Préférentiellement h est compris entre 500 nm et 1 mm, et préférentiellement entre 5 µm et 500 µm.

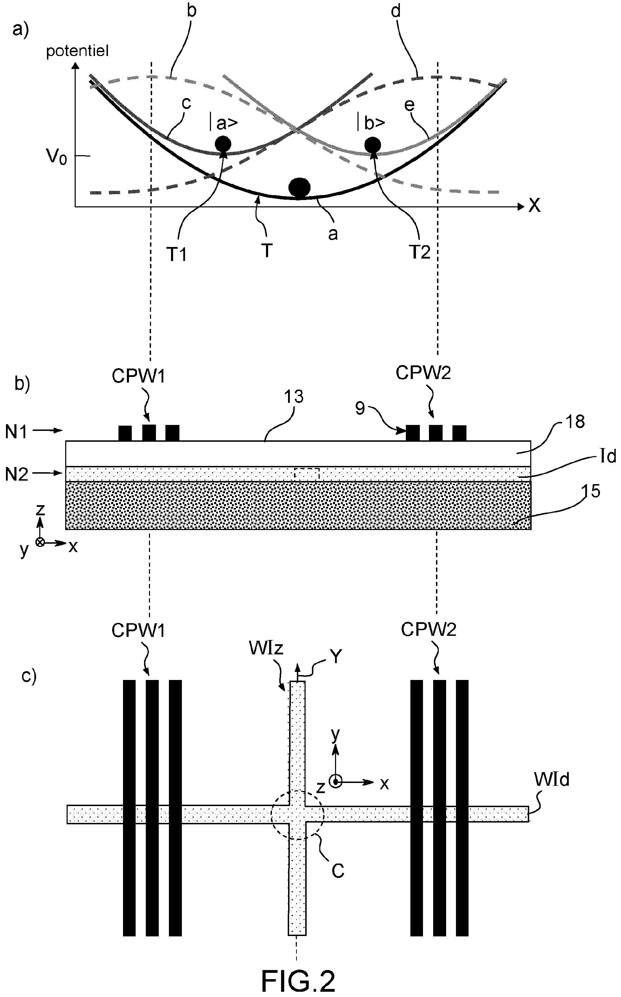

La figure 2 illustre la géométrie des guides et fils de la puce atomique ainsi que les pièges T1 et T2. L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, lorsqu'un courant continu est appliqué sur les deux fils conducteurs se croisant en C, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C et des guides d'ondes (vue de dessus). La partie b) de la figure 2 décrit la disposition correspondante des fils conducteurs et des guides d'onde imprimés sur une puce en vue de profil, en coupe selon le fil conducteur Wld qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

On voit sur la partie a) la séparation symétrique d'atomes ultrafroids, spécifique à l'état interne des atomes ultrafroids, et plus précisément les variations de potentiels en fonction de l'axe X de la puce 1.

La courbe « a » présente un puits de potentiel correspondant à l'association du champ magnétique homogène et du champ créé par les deux fils conducteurs **sécants,** le fil WIz parcouru par le courant I_{Z} et le fil WId parcouru par le courant Id. Il résulte un puits de potentiel local, potentiel initial Vini formant un piège atomique T selon trois dimensions. Un nuage d'atomes ultrafroids peut y être piégé et refroidis.

La courbe « b » présente de manière schématique le potentiel créé par la transmission de micro-ondes à la fréquence ω_{b} dans le guide d'onde CPW1. Le champ émis par le passage de micro-ondes à la fréquence ω_{b} permet de modifier l'énergie des atomes ultrafroids et de déplacer les atomes d'états internes |b>. La courbe « e » illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>.

De manière similaire, la courbe « d » présente de manière schématique le potentiel créé par la transmission de micro-ondes à la fréquence ωₐ dans le guide d'onde CPW2. Le champ émis par le passage de micro-ondes à la fréquence ωₐ permet de modifier l'énergie des atomes ultrafroids et de déplacer les atomes d'états internes |a>. La courbe « c » illustre le potentiel vu par les atomes d'états internes |a> dû aux contributions des potentiels illustrés par la courbe « a » et par la courbe « d ». La courbe « c » présente un minimum local d'énergie permettant de piéger localement un nuage d'atomes ultrafroids d'états internes la>.

L'association d'un piège magnétique DC (créé par les courants continus dans les fils et le champ homogène Bc) et d'un champ micro-onde créé ce qu'on appelle un piège « habillé ». On entend par « habillé » un piège créé au moins en partie par un champ oscillant micro-onde, radio-fréquence ou optique. Les changements des champs micro-ondes (puissance, fréquence et guide dans lequel ils se propagent) permettent de déplacer ce piège habillé et donc de déplacer les atomes. Le piège magnétique DC est représenté sur la figure 2 par la courbe a. Le champ micro-onde à ωₐ est représenté sur la figure 2 par la courbe d et le champ micro-onde à ω_{b} est représenté sur la figure 2 par la courbe b. Le piège habillé T1 (association des courbes a et d) pour l'état |a> est représenté par la courbe c et le piège habillé T2 (association des courbes a et b) pour l'état |b> est représenté par la courbe e.

Les nuages d'atomes ultrafroids d'états internes |a> et |b> peuvent être séparés et piégés de manière symétrique par rapport à l'axe de symétrie Y en imposant simultanément la propagation d'ondes de fréquence ωₐ dans CPW2 et ω_{b} dans CPW1. Pour obtenir deux pièges dont les minima sont de même valeur V0 et dont les courbures sont de même valeur, il est important que le point de croisement C soit disposé à égal distance de CPW1 et CPW2, sur l'axe de symétrie Y.

Les fréquences ωₐ et ω_{b} sont choisies en fonction des fréquences des états |a> et |b> ω₀ₐ et ω_{0b}.

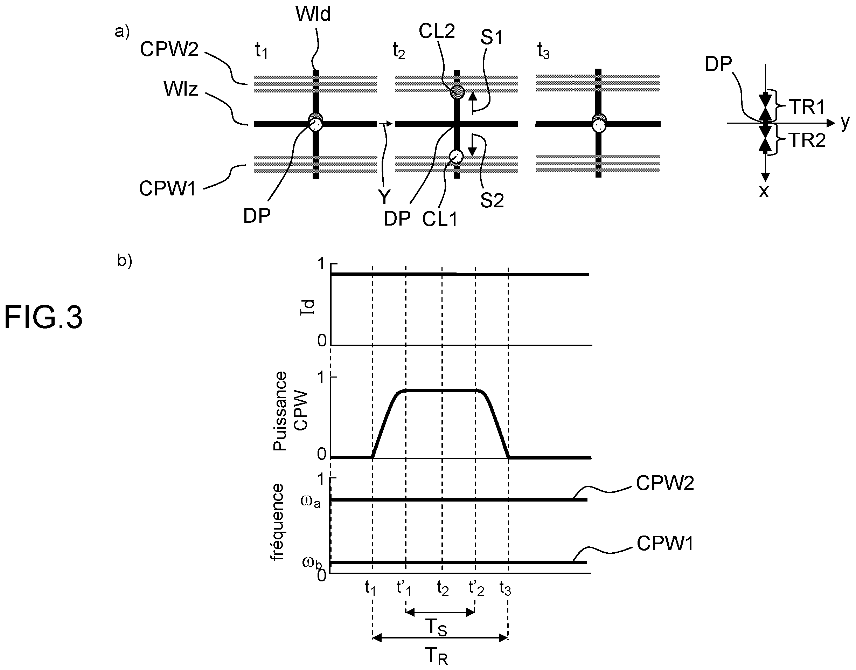

La figure 3 illustre dans sa partie inférieure b) un exemple d'application des différents signaux aux fils et guides selon l'état de l'art pour faire parcourir, dans le cas d'un capteur de type accéléromètre, les trajectoires linéaires aux deux pièges T1 et T2 (et donc aux deux nuages d'atomes piégés), et dans sa partie supérieure a) la position des deux nuages correspondant à des temps choisis. Ainsi la partie a) de la figure 3 présente schématiquement une séquence du déplacement de chacun des nuages d'atomes ultrafroids à des temps caractéristiques t₁ à t₃. La partie b) illustre la séquence des différents courants appliqués aux fils conducteurs, des puissances appliquées aux guides d'onde et des fréquences imposées aux guides d'onde, pour les temps correspondant à ceux de la partie a). Dans la séquence présentée dans la figure 3, le courant I_{z}, non présenté, circulant dans WIz est stationnaire, à une valeur constante. Le courant appliqué à WId est également constant pendant toute la séquence.

Dans une **étape A0,** il y a une phase de préparation des atomes On génère un nuage d'atomes ultrafroids, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène Bc est non nul. Le piégeage s'effectue en appliquant des courants continus dans le fil WIz et dans le fil Wld (génération de Vini). On applique en même temps un champ magnétique de biais Bc parallèle au plan de la puce atomique qui se superpose au champ magnétique crée par les deux fils précédents. Le nuage d'atomes est alors piégé par le potentiel Vini à la verticale de C, intersection des fils WIz et Wld. Cette étape est illustrée par la partie entre 0 et t₁ de la figure 3 partie b).

Dans une **étape B0** on initialise les états internes en superposant de manière cohérente les atomes ultrafroids entre les états |a> et |b> par une première impulsion *π*/2. Cette impulsion peut être réalisée par un laser, une émission micro-ondes, ou plus généralement par une méthode émettant des ondes à une fréquence de transition adaptée. Les courants I_{Z} et I_{d} sont imposés respectivement aux fils conducteurs WIz et Wld. Les deux états internes |a> et |b> sont superposés de manière cohérente et spatialement à l'aplomb du point de croisement C.

Dans une **étape C0** on sépare spatialement le nuage initial en un premier nuage d'atomes ultrafroids CL1 dans un premier état interne |a> d'un deuxième nuage d'atomes ultrafroids CL2 dans un deuxième état interne |b>, en formant un premier pièges à atomes ultrafroids T1 et un deuxième piège T2. Cette étape est illustrée par la partie entre t₁ et t'₁ de la figure 3 partie b).

Dans une étape **D0** on maintient la séparation des deux pièges pendant un temps T_{S} (t'₁ à t'₂) puis on recombine les pièges audit point de départ (t'₂ à t₃).

Pendant les étapes C0 et D0 les deux nuages parcourent respectivement une première trajectoire TR1 et une deuxième trajectoire TR2 linéaires parallèles au plan XY à partir du point de départ DP.

Dans une **étape E0** on recombine les états internes |a> et |b> en appliquant aux atomes ultrafroids une deuxième impulsion π / 2, ce qui transfert la différence de phase sur les populations des deux niveaux atomiques. Les impulsions *π*/2 peuvent être envoyées aux atomes via les guides micro-ondes ou via un émetteur microonde séparé.

La séquence allant de la première à la deuxième impulsion *π*/2 inclus est la séquence de Ramsey (voir plus haut).

Puis dans une étape **F0** on mesure la phase dû à la différence d'énergie potentiel d'accélération entre les deux états |a> et |b> des atomes ultrafroids et on calcule l'accélération du capteur selon l'axe X.

En considérant uniquement la séquence de Ramsey de durée T_{R} entre t₁ et t₃, au départ à t₁ aucune puissance n'est appliquée aux guides d'onde et le nuage est piégé au-dessus du point C. Entre t₁ et t'₁, la puissance micro-ondes injectée dans les guides d'onde CPW1 et CPW2, passe progressivement de 0 à sa valeur maximale, puis la valeur reste maximale et constante entre t'₁ et t'₂ en passant par t₂. Une pulsation ωₐ est envoyée dans le guide d'onde CPW2 et une pulsation ω_{b} est envoyée dans le guide d'onde CPW1, ce qui permet de séparer les deux nuages d'états internes différents de part et d'autre de l'axe de symétrie Y jusqu'aux positions schématisées dans t₂, ces positions étant maintenues pendant toute la durée t'₂-t'₁, qui peut être faible. Entre t'₂ et t₃, la puissance micro-onde dans les guides d'onde est progressivement coupée. Les deux pièges T1 et T2 se déplacent jusqu'à fusionner en un seul piège se situant au point de départ schématisé en t₃ (partie a)).

Afin de mettre en œuvre le procédé décrit plus haut le capteur à atomes ultrafroids permettant une mesure de l'accélération ac comprend :
- une puce atomique 1 telle que décrite précédemment, avec les guides d'onde et les fils conducteurs,
- un dispositif de génération d'atomes pour générer le nuage d'atomes ultrafroids près du plan de mesure 13 de la puce atomique,
- un générateur du champ magnétique homogène Bc
- au moins un générateur de tension ou de courant continu adapté à commander des courants électriques dans les fils conducteurs et au moins un générateur de tension ou de courant micro-ondes connecté aux guides d'ondes,
- un système de détection, typiquement d'une intensité optique, adapté à mesurer au moins une population d'atomes ultrafroids dans un état interne, cette mesure permettant la détermination de la phase dû à la différence d'énergie potentiel d'accélération entre les deux états |a> et |b> et donc la détermination de l'accélération ac.

Pour obtenir une mesure plus précise des paramètres inertiels (temps, accélération, vitesse de rotation) on peut utiliser la redondance de la mesure. Des architectures intégrant plusieurs capteurs, horloges, accéléromètres et gyromètres sont décrites dans le document US2023/0178262. Le capteur est basé sur une puce matricielle AchM0 permettant la réalisation de plusieurs capteurs élémentaires.

La figure 4 illustre un exemple d'une matrice 6x6 de ce document. Les guides d'ondes selon 6 axes Xn et selon 6 axes Ym forment les colonnes et les lignes de la matrice. Chaque pixel (n,m) de la matrice correspond à un capteur élémentaire potentiel qui peut être configuré en fonction du besoin. Par exemple les puces de la colonne C1 mesurent l'accélération selon X ax, les puces de la colonne C2 mesurent la vitesse de rotation autour de l'axe Y Ωy, les puces de la ligne L1 mesurent l'accélération selon Y ay et les puces de la ligne L2 mesurent la vitesse de rotation autour de l'axe X Ωx. Comme une mesure nécessite une séquence particulière pour les guides coplanaires, ceux-ci ne peuvent être partagés pour deux mesures simultanées de deux paramètres inertiels distincts. Ainsi les pixels 4 entourés d'un cercle ne sont pas utilisés. La puce matricielle est ainsi reconfigurée selon les besoins : le type de mesure souhaité (ax, ay, Ωx, Ωy, t), la précision souhaitée (fonction du nombre de puce réalisant simultanément la mesure), etc... On réalise ainsi sur une même puce matricielle des mesures en parallèle, redondantes et/ou complémentaires. A noter qu'une mesure de Ωz est également possible avec une séquence particulière d'application de courants continus et/ou du champ magnétique et/ou des champs microondes, avec une topologie de la puce adaptée le cas échéant (voir par exemple les documents US2023/0178262 et US2022/0397396).

La figure 4bis illustre un autre exemple d'une matrice 6x6 du document US2023/0178262 dans laquelle les guides d'ondes forment les diagonales, numérotées (D1 à D6, puis D1' à ...). Les lignes et les colonnes sont formées par les fils DC W1n et W2m. Des pixels de la diagonale Sud Est-Nord Ouest D5 mesurent ax, certains pixels de la diagonale D6 mesurent Ωy. La diagonale Sud Ouest-Nord Est D6' mesure Ωx, et la diagonale Sud Ouest-Nord Est D7' mesure ay. Ainsi les puces élémentaires 5 entourées d'un cercle ne sont pas utilisées pour les même raisons que précédemment.

Les capteurs basés sur une puce matricielle comprenant une pluralité de capteurs élémentaires selon les diverses géométries décrites ci-dessus permettent de:
Réaliser sur une seule et même puce la fonction horloge, la mesure de l'accélération suivant deux axes orthogonaux et la mesure des rotations suivant trois axes orthogonaux deux à deux,

Dupliquer la géométrie élémentaire sur une même puce atomique pour réaliser toutes les mesures précédemment citées en parallèle et implémenter une redondance entre les différentes mesures.

Cependant cette solution ne permet pas l'élimination des biais de mesures ni la correction d'erreur.

À toute mesure est associée une incertitude qui se traduit par une erreur sur la mesure. Cette erreur peut être due à des facteurs aléatoires qui sont inévitables et qu'on ne peut corriger (on peut cependant en estimer l'amplitude), mais aussi à des facteurs systématiques dus à des imperfections du capteur ou des conditions de mesures imparfaites. C'est ce dernier type d'erreur qu'on appelle aussi biais.

Un but de la présente invention est de remédier aux inconvénients précités en proposant un capteur inertiel de type accéléromètre et un procédé de mesure permettant la correction de certains biais, afin d'obtenir de meilleurs performances du capteur.

### DESCRIPTION DE L'INVENTION

La présente invention a pour objet un capteur inertiel à atomes ultrafroids interférométrique de type accéléromètre comprenant :
- une puce atomique placée dans une enceinte à vide, comportant un plan XY dit plan de mesure normal à un axe Z, et comprenant au moins un ensemble d'un premier et un deuxième capteur élémentaire, chaque capteur élémentaire comprenant :
   ∘ au moins une première paire de guides d'ondes parallèles en eux et au moins une deuxième paire de guides d'ondes parallèles en eux et sécante avec la première paires,
   ∘ un groupe d'un ou plusieurs éléments conducteurs,
- un dispositif de génération d'atomes configuré pour générer un nuage initial d'atomes ultrafroids associé au premier capteur élémentaire et un nuage initial d'atomes ultrafroids associé au deuxième capteur élémentaire, lesdits nuages initiaux étant localisés près dudit plan XY de ladite puce,
- un générateur d'un champ magnétique homogène (Bc),
- un dispositif d'alimentation comprenant au moins un générateur microonde et au moins un générateur de courant continu, le dispositif d'alimentation étant configuré pour appliquer des signaux microonde auxdits guides d'ondes et des courants continus auxdits éléments conducteurs,
- le générateur de champ magnétique et le dispositif d'alimentation étant configurés par appliquer le champ magnétique, les courants continus et les signaux microondes selon une séquence prédéterminée,
- un agencement dudit groupe d'un ou plusieurs éléments conducteurs et ladite séquence étant configurés, lors de la mise en œuvre de chaque capteur, pour:
   i) Générer un potentiel initial de piégeage dudit nuage initial d'atomes ultrafroids définissant un point de départ,
   ii) Séparer spatialement le nuage initial en un premier nuage d'atomes ultrafroids dans un premier état interne d'un deuxième nuage d'atomes ultrafroids dans un deuxième état interne, en formant respectivement un premier et deuxième pièges à atomes ultrafroids, et de sorte que le premier nuage, le deuxième nuage et le point de départ soient alignés selon un axe de mesure,
   iii) Maintenir la séparation desdits premier et deuxième pièges pendant un temps T_{S} puis recombiner lesdits pièges audit point de départ, de sorte que lesdits premier et deuxième nuages parcourent respectivement une première et une deuxième trajectoire linéaire parallèle au plan XY à partir du point de départ,
- l'agencement dudit groupe d'un ou de plusieurs éléments conducteurs de chaque capteur et ladite séquence étant en outre configurés pour que les trajectoires associées au premier capteur élémentaire et les trajectoires associées au deuxième capteur élémentaire soient parallèles entre elles, de même longueur, parcourues simultanément et de sorte que le sens de départ des premiers nuages, respectivement du premier et du deuxième capteur élémentaire, soient opposés,
- le capteur comprenant en outre un système de détection adapté à mesurer au moins une première phase du premier capteur élémentaire et une deuxième phase du deuxième capteur élémentaire, une accélération étant déterminée à partir d'une différence entre la première et la deuxième phase.

Selon un mode de réalisation le dispositif d'alimentation PSD est en outre configuré pour appliquer des courants continus auxdits guides d'onde.

Selon un mode de réalisation la première et la deuxième paire de guides d'onde sont perpendiculaires entre elles, et le capteur comprend au moins deux ensembles configurés pour réaliser une mesure d'accélération respectivement selon deux axes orthogonaux.

Selon un mode de réalisation la puce atomique présente une structure matricielle dont les pixels définissent des capteurs élémentaires potentiels, un ensemble comprenant deux pixels de la matrice.

Selon un mode de réalisation des ensembles d'un premier et d'un deuxième capteur élémentaires présentent au moins un élément conducteur en commun.

Selon un autre aspect l'invention concerne un centrale inertielle comprenant au moins deux capteurs de type accéléromètre selon l'invention configurés pour réaliser une mesure d'accélération respectivement selon deux axes orthogonaux, la puce atomique matricielle comprenant en outre des pixels configurés pour réaliser au moins une mesure d'horloge et des pixels configurés pour réaliser des mesures de vitesses de rotation selon trois axes orthogonaux.

Selon un autre aspect l'invention concerne également un procédé de mesure d'une accélération par un capteur inertiel à atomes ultrafroids interférométrique comprenant une puce atomique placée dans une enceinte à vide, comportant un plan XY dit plan de mesure normal à un axe Z, et comprenant au moins un ensemble d'un premier et un deuxième capteur élémentaire, chaque capteur élémentaire comprenant :
∘ au moins une première paire de guides d'ondes parallèles en eux et au moins une deuxième paire de guides d'ondes parallèles en eux et sécante avec la première paires,
∘ un groupe d'un ou plusieurs éléments conducteurs,
le procédé comprenant les étapes consistant à :
A. Générer un nuage initial d'atomes ultrafroids associé au premier capteur élémentaire et un nuage initial d'atomes ultrafroids associé au deuxième capteur élémentaire, lesdits nuages initiaux étant localisés près dudit plan XY de ladite puce,
B. Générer un champ magnétique homogène,
C. Pour chaque capteur générer un potentiel initial de piégeage dudit nuage initial d'atomes ultrafroids,
D. Pour chaque capteur initialiser un premier état interne et un deuxième état interne par une première impulsion π / 2,
E. Pour chaque capteur séparer spatialement le nuage initial en un premier nuage d'atomes ultrafroids dans le premier état interne d'un deuxième nuage d'atomes ultrafroids dans le deuxième état interne, en formant respectivement un premier et deuxième pièges à atomes ultrafroids, et de sorte que le premier nuage, le deuxième nuage et le point de départ soient alignés selon un axe de mesure,
F. Pour chaque capteur, maintenir la séparation desdits premier et deuxième pièges pendant un temps T_{S} puis recombiner lesdits pièges audit point de départ, de sorte que les dits premiers et deuxièmes nuages parcourent respectivement une première et une deuxième trajectoire linéaire parallèle à XY à partir du point de départ,
   les étapes B à F s'effectuant en appliquant, selon une séquence prédéterminée, un champs magnétique homogène, des courants continus auxdits éléments conducteurs et des signaux microonde (I_{MW}) auxdits guides d'onde,
   l'agencement dudit groupe d'éléments d'un ou plusieurs éléments conducteurs et ladite séquence prédéterminée étant en outre configurés pour que les trajectoires associées au premier capteur élémentaire et les trajectoires associées au deuxième capteur élémentaire soient parallèles entre elles, de même longueur, parcourues simultanément, et de sorte que le sens de départ des premiers nuages, respectivement du premier et du deuxième capteur, soient opposés,
G. Recombiner lesdits premier et deuxième états internes en appliquant auxdits atomes ultrafroids une deuxième impulsion *π*/2,
H. Mesurer au moins une première phase du premier capteur élémentaire et une deuxième phase du deuxième capteur élémentaire, une accélération étant déterminée à partir d'une différence entre la première et la deuxième phase.

Selon un mode de réalisation l'étape C comprend l'application de courants continus dans au moins un élément conducteur.

Selon un mode de réalisation l'étape E et l'étape F comprennent l'application de signaux micro-onde dans une paire de guides d'onde afin de mesurer une accélération selon un axe de mesure perpendiculaire aux guides d'onde de ladite paire.

Selon un mode de réalisation dans l'étape E et l'étape F l'application de signaux micro-onde comprend :
- pour le premier capteur élémentaire l'application d'un signal de fréquence ωₐ dans un des guides d'onde et l'application d'une fréquence ω_{b} dans l'autre guide d'onde,
- pour le deuxième capteur l'application d'un signal de fréquence ω_{b} dans un des guides d'onde et l'application d'une fréquence ωₐ dans l'autre guide d'onde,
lesdites fréquences ωₐ et ω_{b} étant déterminées à partir des fréquences de résonnance desdits premier et deuxième états internes.

Selon un mode de réalisation l'étape F comprend une sous étape de coupure des signaux microonde et une sous étape d'application de courants continus auxdits guides d'onde.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 illustre un exemple de puce atomique selon l'état de la technique.
La figure 2 illustre la géométrie des guides et fils d'une puce atomique selon l'état de la technique, ainsi que les pièges magnétiques.
La figure 3 illustre dans sa partie inférieure b) un exemple d'application des différents signaux aux fils et guides selon l'état de l'art pour faire parcourir, dans le cas d'un capteur de type accéléromètre, les trajectoires linéaires aux deux pièges et dans sa partie supérieure a) la position des deux nuages correspondant à des temps choisis.
La figure 4 illustre une première variante de puce matricielle selon l'état de la technique permettant la réalisation de plusieurs capteurs élémentaires.

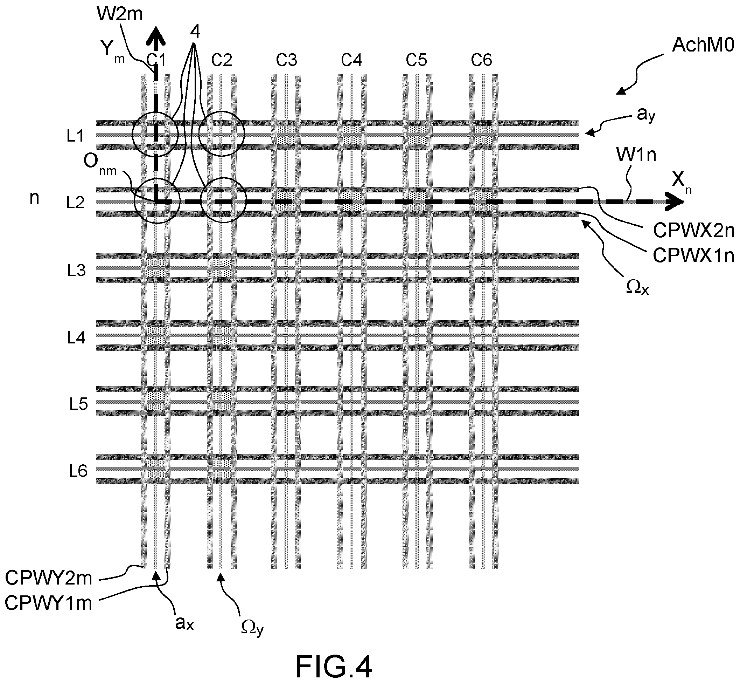

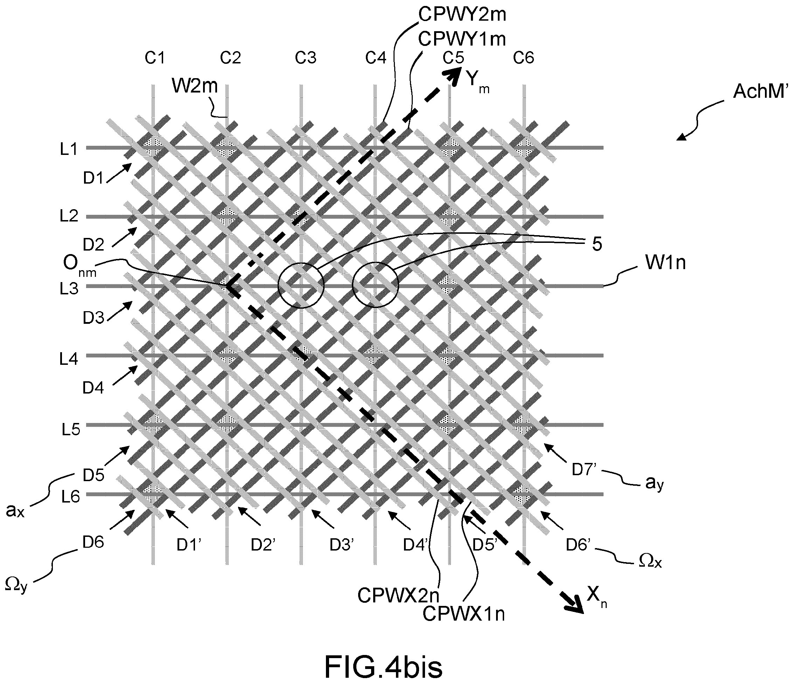

La figure 4bis illustre une deuxième variante de puce matricielle selon l'état de la technique permettant la réalisation de plusieurs capteurs élémentaires.

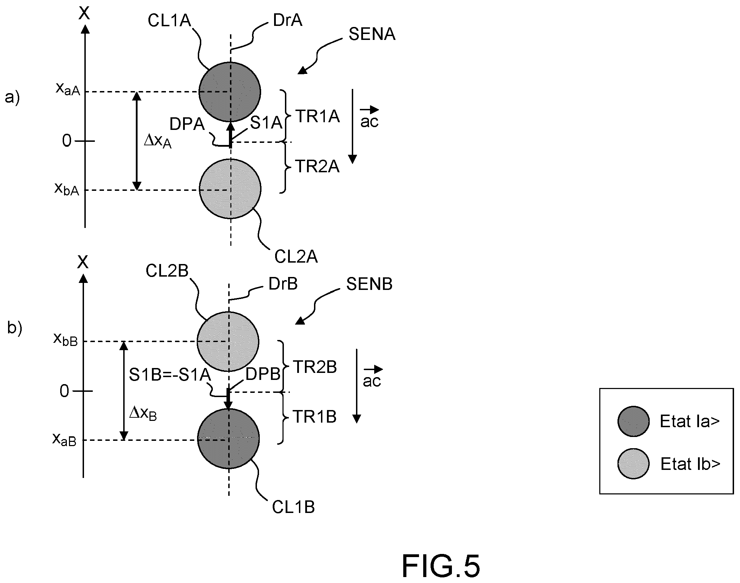

La figure 5 illustre le principe du capteur selon l'invention qui comprend un premier capteur élémentaire illustré dans la partie a) et un deuxième capteur élémentaire illustré dans la partie b).

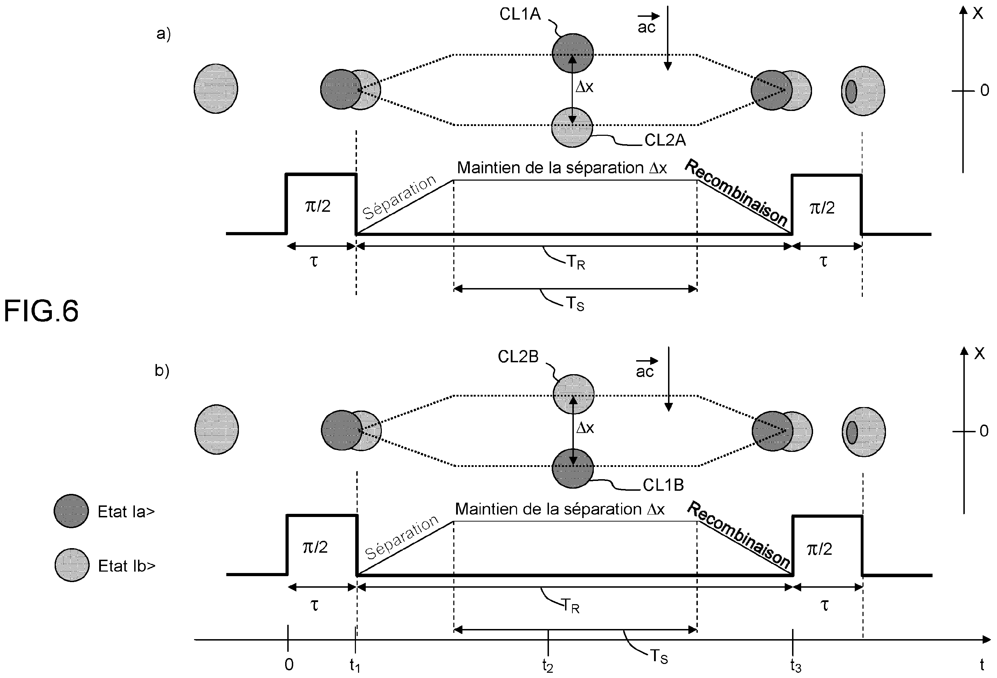

La figure 6 illustre le déroulement temporel des mesures effectuées avec les deux capteurs, SENA pour la partie supérieure a) et SENB pour la partie inférieure b).

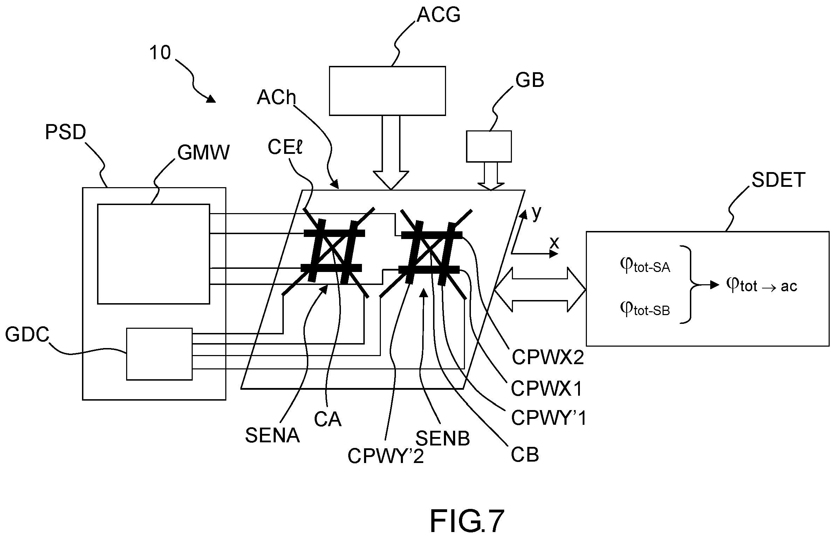

La figure 7 illustre le capteur inertiel interférométrique à atomes ultrafroids de type accéléromètre selon l'invention.

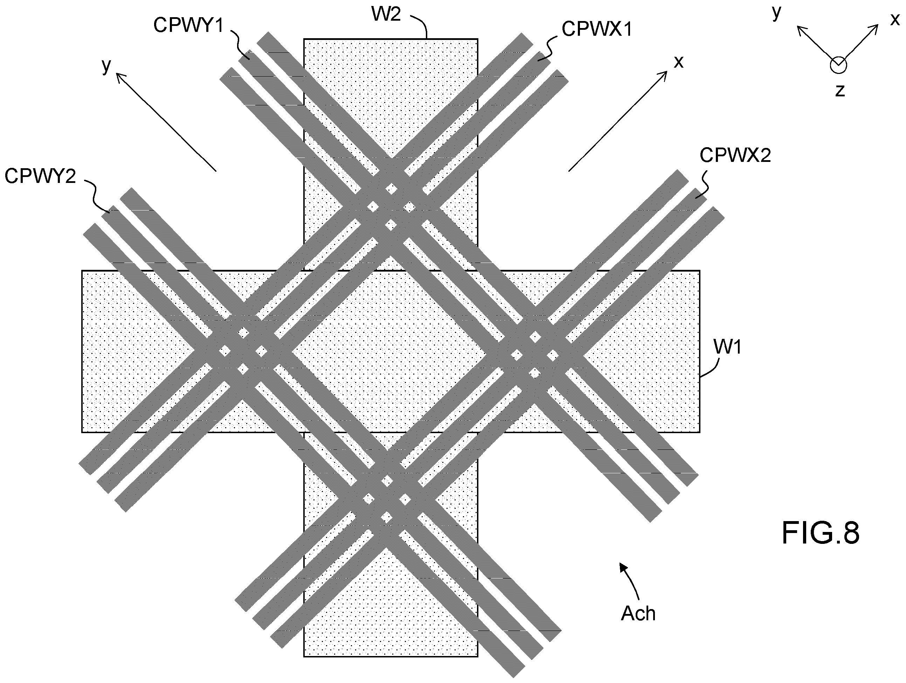

La figure 8 illustre un exemple de topologie de puce comprenant deux rubans qui se croisent compatible avec la réalisation de capteurs élémentaires selon l'invention.

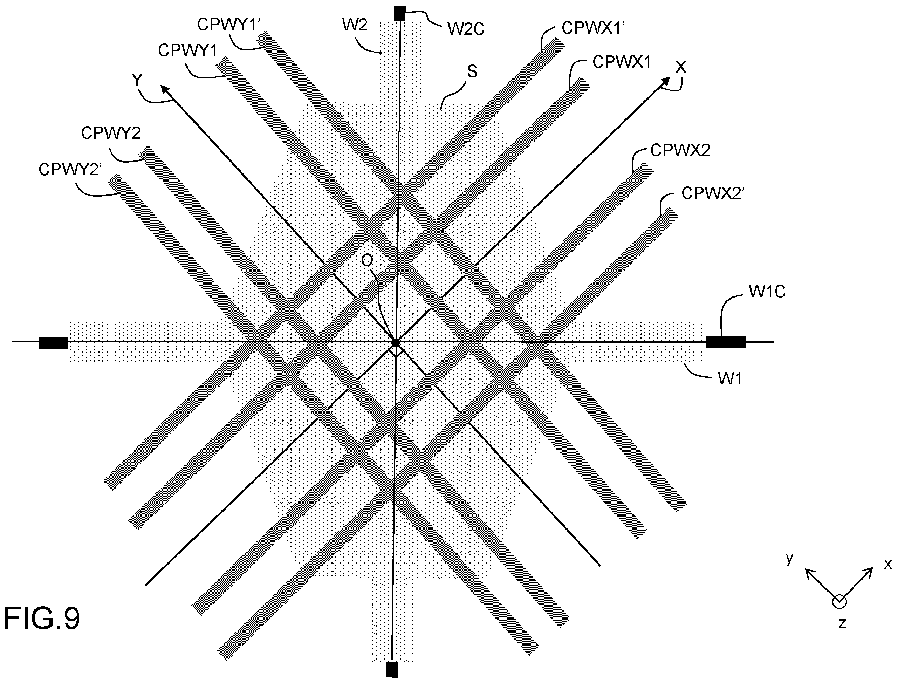

La figure 9 illustre un autre exemple de topologie de puce comprenant un fil évasé compatible avec la réalisation de capteurs élémentaires selon l'invention.

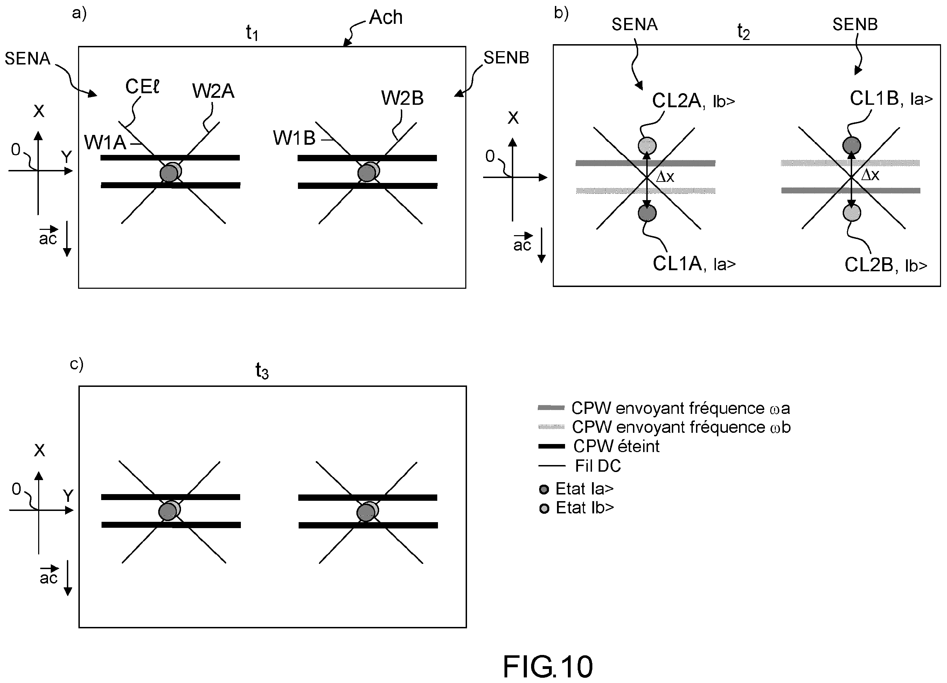

La figure 10 illustre un exemple d'implémentation pour la réalisation de deux mesures d'accélération selon le même axe, à l'aide de deux capteurs élémentaires sur la même puce selon l'invention. Pour plus de clarté une seule paire de guide est représentée, les guides parallèles à l'axe Y, pour une mesure d'une l'accélération selon l'axe X.

### DESCRIPTION DETAILLEE DE L'INVENTION

L'idée de l'invention est d'utiliser deux capteurs élémentaires configurés d'une manière particulière pour éliminer des biais de mesure.

La formule (1) énoncée ci-dessus correspond par exemple à un capteur SENA pour lequel la trajectoire TR1A est parcourue par le nuage CL1 et la trajectoire TR2A parcourue par le nuage CL2, tel qu'illustré figure 5 partie supérieure a)). Le nuage CL1A part du point de départ DPA dans un sens de départ S1A (et le nuage CL2A part du point de départ dans un sens de départ S2A non représenté sur la figure 5). Sur la figure 5 a) le sens de départ S1A est vers le haut (le sens S2A est vers le bas). Les abscisses des points extrêmes des trajectoires TR1A (nuage CL1A dans l'état |a>) et TR2A (nuage CL2A dans l'état |b>) de SENA sont respectivement dénommés x_{aA} et x_{bA} , avec Δx_{A} = |X_{aA} - x_{bA}|.

Pour un accéléromètre, le signe du déphasage induit par la présence d'une accélération pendant la phase d'interférométrie dépend de la façon dont les deux nuages d'atomes parcourent les deux trajectoires. Le signe du déphasage dépend du sens dans lesquels partent les deux nuages par rapport au point de départ.

Considérons deux accéléromètres à atomes froids SENA et SENB disposés sur la même puce avec séparation des pièges à l'aide d'un potentiel de piégeage déplaçable, chacun étant orienté de sorte qu'il soit sensible aux accélérations selon un même axe (e.g. l'axe des X dans l'exemple). Cela signifie que la droite DrA sur laquelle s'appuient les trajectoires TR1A et TR2A de SENA et la droite DrB sur laquelle s'appuient les trajectoires TR1B et TR2B de SENB sont parallèles entre elles et à X. Les abscisses des points extrêmes des trajectoires TR1B (nuage CL1B dans l'état |a>) et TR2B (nuage CL2B dans l'état |b>) de SENB sont respectivement dénommés x_{bB} et x_{aB} , avec Δx_{b}= |x_{bB} - x_{aB}| (voir partie b) de la figure 5).

Considérons que pour le capteur SENB le sens de départ S1B du premier nuage CL1B soit opposé au sens de départ S1A du premier nuage CL1A de SENA. On a S1B = -S1A, c'est-à-dire que le premier nuage CL1B part ici vers le bas. Bien entendu cette condition est également respectée pour les deuxièmes nuages CL2A et CL2B. Cela est illustré figure 5 partie inférieure b). Le nuage CL1B partant du point de départ DPB dans le sens S1B part vers le bas.

Lorsque les sens de parcours des états atomiques utilisés sur ces capteurs sont intervertis comme illustrée 5, chaque accéléromètre va accumuler le même déphasage à une différence de signe près.

Ce résultat est obtenu pour des trajectoires parallèle entre elles, de même longueur et parcourues simultanément et de sorte que le sens de départ des nuages CL1A et CL1B soient opposés : Δx_{A}=Δx_{B}=Δx.

La figure 6 illustre le déroulement temporel des mesures effectuées avec les deux capteurs, SENA pour la partie supérieure a) et SENB pour la partie inférieure b). Après une première impulsion π/2 (durée τ) les deux couples de nuages sont séparés simultanément à partir de t₁ (début de la séquence de Ramsey), puis sont maintenus séparés pendant un temps Ts, puis sont recombinés. Enfin une deuxième impulsion π/2 met fin à la séquence de Ramsay, de durée totale T_{R}. En réalisant simultanément deux mesures (une pour chaque capteur), il est possible d'éliminer la présence de biais de mesure comme expliqué plus loin.

Soit *φ_{tot-SA}* la phase accumulée lors de la séquence interférométrique correspondant à la figure 5 partie a) et *φ_{tot-SB}* la phase accumulée lors de la séquence interférométrique correspondant à la figure 5 partie b). On a en reprenant la formule (1) :
${φ}_{tot _ SA} = {φ}_{clock} + {φ}_{acc} = \left\{ω-\left({ω}_{ab}+\frac{m . ac . Δ x}{ℏ}\right)\right\} {T}_{R}$ (2A)
${φ}_{tot _ SB} = {φ}_{clock} - {φ}_{acc} = \left\{ω-\left({ω}_{ab}-\frac{m . ac . Δ x}{ℏ}\right)\right\} {T}_{R}$ (2B)

En considérant que la mesure est entachée d'un biais, on a:
${φ}_{tot _ SA} = {φ}_{clock} + {φ}_{acc} + {φ}_{biais}$
${φ}_{tot _ SB} = {φ}_{clock} - {φ}_{acc} + {φ}_{biais}$

Avec *φ_{biais}* phase additionnelle due au biais présente dans toute mesure (biais dit « additif »).

Si un biais (non négligeable) est présent, la détermination de *φ_{tot_SA} - φ_{tot_SB}* permet de l'éliminer:
${φ}_{acc} = \frac{1}{2} \left({φ}_{tot _ SA}-{φ}_{tot _ SB}\right)$ (3)

Ainsi pour effectuer une mesure permettant de supprimer le biais, il faut réaliser deux séquences interférométriques en parallèle avec deux capteurs de la même puce.

Le capteur inertiel interférométrique à atomes ultrafroids 10 selon l'invention utilise cette propriété et est illustré figure 7. Il comprend une puce atomique ACh placée dans une enceinte à vide, comportant un plan XY dit plan de mesure normal à l'axe Z. La puce comprend au moins un ensemble d'un premier capteur élémentaire SENA et un deuxième capteur élémentaire SENB. Chaque capteur élémentaire comprend au moins une première paire de guides d'ondes (CPWX1, CPWX2) parallèles entre eux et au moins une deuxième paire de guides d'ondes (CPWY'1, CPWY'2) parallèles entre eux et sécante avec la première paire. L'intersection des deux paires définissent un parallélogramme. La puce atomique comprend également un groupe d'un ou plusieurs éléments conducteurs CE.

Le capteur comprend en outre un dispositif de génération d'atomes ACG configuré pour générer un nuage initial d'atomes ultrafroids associé au premier capteur élémentaire SENA et un nuage initial CLB d'atomes ultrafroids associé au deuxième capteur élémentaire SENB. Les nuages initiaux sont localisés près dudit plan XY de la puce. Le capteur comprend également un générateur GB d'un champ magnétique homogène Bc et un dispositif d'alimentation PSD. Le dispositif d'alimentation comprend au moins un générateur microonde GMW configuré pour appliquer des signaux microonde aux guides d'ondes et au moins un générateur de courant continu configuré pour appliquer des courants continus aux éléments conducteurs. Le générateur de champ magnétique GB et le dispositif d'alimentation PSD étant configurés pour appliquer le champ magnétique Bc, les courants continus et les signaux microondes selon une séquence prédéterminée.

L'agencement du groupe d'un ou plusieurs éléments conducteurs et la séquence prédéterminée sont configurés, lors de la mise en œuvre de chaque capteur, pour effectuer sur les nuages les différentes étapes décrites précédemment.

Il s'agit tout d'abord de générer un potentiel initial de piégeage Vini dudit nuage initial d'atomes ultrafroids, puis de séparer spatialement le nuage initial en un premier nuage d'atomes ultrafroids (CL1A pour SENA et CL1B pour SNEB) dans un premier état interne d'un deuxième nuage d'atomes ultrafroids (CL2A pour SENA et CL2B pour SENB) dans un deuxième état interne, en formant respectivement un premier piège à atomes ultrafroids (T1A pour SENA et T1B pour SENB) et un deuxième piège à atomes ultrafroids (T2A pour SENA et T2B pour SENB). En outre le premier nuage, le deuxième nuage et le point de départ sont alignés selon un axe de mesure :

Point de départ DPA pour SENA avec CL1A, DPA et CL2A alignés selon la droite DrA.

Point de départ DPB pour SENB avec CL1B, DPB et CL2B alignés selon la droite DrB.

Les points de départ DPA pour SENA et DPB pour SENB sont préférentiellement situés au centre du parallélogramme, qui est un rectangle lorsque les paires sont perpendiculaires (axe Y'=Y).

Comme illustré figure 5 pour chaque capteur le premier nuage, le deuxième nuage et le point de départ sont alignés selon un axe de mesure.

Puis on maintient la séparation des premiers et deuxièmes pièges pendant un temps T_{S}, puis on recombine les pièges au point de départ, de sorte que les premier et deuxième nuages parcourent respectivement une première et une deuxième trajectoire linéaire parallèle au plan XY à partir du point de départ.

L'agencement du groupe d'un ou de plusieurs éléments conducteurs de chaque capteur et la séquence d'application de courants continus dans des éléments conducteurs, de signaux microonde dans les guides et du champs magnétique au voisinage de la puce atomique Ach sont en outre configurés pour que les trajectoires (TR1A et TR2A) associées au premier capteur élémentaire et les trajectoires (TR1B et TR2B) associées au deuxième capteur élémentaire soient parallèles entre elles, de même longueur et parcourues simultanément. De plus le sens de départ des premiers nuages respectivement du premier et du deuxième capteur élémentaire sont opposés. Soit S1A le sens de départ de CL1A et S2A le sens de départ de CL1B, on a S1B = -S1A. La même condition est également respectée pour les deuxièmes nuages CL2A et CL2B.

Le capteur comprend en outre un système de détection SDET adapté à mesurer au moins une première phase *φ_{tot_SA}* du premier capteur élémentaire et une deuxième phase *φ*_{*tot*_*SB*} du deuxième capteur élémentaire. L'accélération ac est déterminée à partir d'une différence entre la première et la deuxième phase (propriété exprimée avec la formule (3)). Lors de la mise en œuvre du capteur selon l'invention on effectue donc une double mesure simultanée d'un même paramètre, la phase accumulée pendant la séquence interférométrique.

En utilisant la propriété de l'interféromètre explicitée par les formules (2A) (2B) et (3) l'accélération ainsi déterminée est corrigée du biais dit « additif » qui entache chaque mesure de manière identique. Cette réduction des biais de mesure conduit à une incertitude de mesure de l'accéléromètre selon l'invention réduite, soit une meilleure sensibilité, ce qui permet d'obtenir des temps de navigation inertielle plus longs.

Préférentiellement la première et la deuxième paire de guides d'onde sont perpendiculaires entre elles. Par exemple les guides de la première paires sont parallèle à l'axe X et les guides de la deuxième paire sont parallèles à l'axe Y'=Y. L'ensemble des deux accéléromètres (SENA et SENB) est ainsi apte à mesurer des accélérations selon deux axes orthogonaux. Ils mesurent l'une ou l'autre des accélérations sans biais en fonction de la séquence appliquée.

Selon un mode de réalisation le capteur comprend au moins deux ensembles configurés respectivement pour réaliser une mesure d'accélération selon deux axes orthogonaux. Ainsi la mesure de l'accélération acx selon X sans biais est effectuée par le premier ensemble et la mesure de acy selon Y biais est effectuée par le deuxième ensemble. Les mesures de acx et acy sans biais peuvent ainsi être réalisées simultanément.

Le capteur selon l'invention est compatible de toute géométrie de puce atomique comprenant les deux paires de guides microondes permettant la génération de pièges dit habillés (voir état de la technique), c'est-à-dire la génération d'un potentiel de piégeage, et la séparation sélective de ces pièges en fonction des états internes selon une trajectoire linéaire telle que décrite précédemment.

Ainsi les éléments conducteurs CEl de la puce peuvent être agencés de différentes manières. Ce qui compte c'est la génération d'un potentiel de piégeage issu de la combinaison des champs DC générés par les éléments conducteurs parcourus de courants continus et des champs microonde générés par les guides d'ondes parcourus de signaux microonde, ce potentiel de piégeage pouvant être déplacé pour la réalisation de la séparation et donc de la trajectoire linéaire.

Par exemple le capteur selon l'invention est compatible avec toutes les géométries de puces décrites dans l'état de la technique, associées aux différents modes d'adressage, c'est-à-dire à des séquences particulières d'application du champ magnétique, des courants continus et des champs microonde.

Des géométries d'éléments conducteurs ont été décrites pour des applications gyromètre. Ces géométries sont applicables ici puisqu'elles permettent d'effectuer une séparation des deux nuages à partir d'un point de départ. L'accéléromètre ne requiert pas de déplacement des pièges selon une trajectoire fermée.

Typiquement selon l'état de la technique le potentiel de piégeage initial est généré par application de courants continus dans les éléments conducteurs.

Selon un mode de réalisation ces éléments conducteurs sont deux fils qui se croisent au point C, tel qu'illustré figure 7 (point CA pour SENA et CB pour SENB).

Selon un autre mode de réalisation les éléments conducteurs comprennent deux rubans W1 et W2 qui se croisent tel qu'illustré figure 8 et décrit dans le document US2022/0397397.

Selon un autre mode de réalisation les éléments conducteurs comprennent un fil évasé W2 tel qu'illustré figure 9 et décrit dans le document US2022/0397396. Les paires additionnelles de guides (CPWX1', CPWX2') et (CPWY1', CPWY2'), le deuxième fil W1 et les fils de chargement W1C et W2C illustrés figure 9 sont optionnels pour l'accéléromètre selon l'invention.

La séparation des deux pièges T1 et T2 s'effectue par applications de signaux microondes aux différents guides d'ondes.

Selon un mode de réalisation le maintien de la séparation s'effectue en maintenant les signaux microondes aux différents guides d'ondes.

Selon autre un mode de réalisation, une fois les nuages séparés, on remplace les signaux microondes appliqués aux guides d'onde par des courants continus. Ce mode de réalisation est décrit pour l'application gyromètre dans le document FR2306475 (non encore publié à la date de dépôt). Le dispositif d'alimentation PSD est dans ce cas en outre configuré pour appliquer des courants continus aux guides d'onde. Ce remplacement permet de diminuer le bruit de mesure.

Le capteur selon l'invention est ainsi indépendant de la géométrie de la puce atomique et de la méthode de maintien des pièges utilisée. La puce peut présenter une autre géométrie d'éléments conducteurs associés aux guides d'ondes non décrites dans les documents précités, ainsi que des guides d'ondes additionnels. La mise en œuvre du capteur peut utiliser d'autres méthodes (séquences) de séparation/maintient permettant la réalisation d'un potentiel de piégeage déplaçable (c'est-à-dire dont le minimum peut être déplacé) que celles décrites dans les documents précités.

En pratique un exemple d'implémentation de la réalisation de deux mesures d'accélération selon le même axe, à l'aide de deux capteurs élémentaires sur la même puce en déplaçant chaque état de façon antisymétrique est illustré figure 10, qui se base sur le principe de fonctionnement d'un accéléromètre illustré figure 3. Pour plus de clarté une seule paire de guide est représentée, les guides parallèles à l'axe Y, pour une mesure d'une l'accélération selon l'axe X.

Le potentiel Vini est généré pour chaque capteur par deux fils, (W1A et W2A) pour SENA et (W1B et W2B) pour SENB, et parcourus de courants continus. Les deux fils se croisent en un point disposé à égale distance de deux guides. Ainsi les fils DC d'un même capteur (avec un champ de biais extérieur Bc) permettent de réaliser un piège magnétique pour manipuler et conserver les atomes, notamment pendant la phase d'interférométrie.

Les guides d'ondes coplanaires permettent, lorsque qu'un signal micro-onde est injecté à l'intérieur (à la bonne puissance et fréquence), de déplacer de façon sélective les atomes selon l'état électronique dans lequel il se trouve en les poussant.

Sur la figure 10, on a représenté schématiquement différents instants de la séquence d'interférométrie pour mieux visualiser les déplacements induits sur les états atomiques dû aux différents courants DC et micro-ondes à injecter au même moment sur les deux capteurs.

À t = 0 les atomes du capteur SENA sont dans l'état |a> et ceux du capteur SENB également. Le nuage de chacun des capteurs a été préparé dans les mêmes conditions pour que ces derniers aient les mêmes propriétés (nombre d'atomes, température, état ...). Chaque capteur a un nuage d'atome piégé à l'intérieur d'un piège magnétique créé par les deux fils DC du capteur qui lui correspond. Les guides d'ondes coplanaires sont pour l'instant éteints. La séquence d'interférométrie de chaque capteur débute simultanément et dans les mêmes conditions à t = 0 ; par une impulsion *π*/2 de durée τ (pour chaque capteur) et qui se termine à t₁, comme illustré figure 6. Cette impulsion va mettre chacun des nuages dans une superposition cohérente à poids égaux des deux états de l'interféromètre.

Entre t₁ (partie a) de la figure 10) et t₂ (partie b) de la figure 10), on allume progressivement les guides d'ondes coplanaires des deux capteurs tel que représenté sur la figure 10. En effet, on a besoin de déplacer de façon sélective chaque état dans des directions opposées. La subtilité réside dans les fréquences utilisées dans les guides d'ondes de chaque capteur :

Dans les guides d'ondes coplanaires du capteur SENA (à gauche), on injecte la fréquence micro-onde ωₐ correspondant à l'habillage de l'état |a> dans le guide d'onde qui se trouve dans les x positifs, et la fréquence micro-onde ω_{b} correspondant à l'habillage de l'état |b> dans le guide d'onde qui se trouve dans les x négatifs.

Dans les guides d'ondes coplanaires du capteur SENB (à droite), on injecte la fréquence micro-onde ωₐ correspondant à l'habillage de l'état |a> dans le guide d'onde qui se trouve dans les x négatifs, et la fréquence micro-onde ω_{b} correspondant à l'habillage de l'état |b> dans le guide d'onde qui se trouve dans les x positifs.

Ainsi, le capteur SENA va donc déplacer l'état |b> vers les *x* positifs et l'état |a> vers les *x* négatifs tandis que le capteur SENB va déplacer l'état |a> vers les *x* positifs et l'état |b> vers les *x* négatifs. Le déplacement sélectif des états se fait donc de façon antisymétrique entre les deux capteurs, c'est de dire que les sens de départ de chaque type de nuage sont opposés pour les deux capteurs.

Après une durée de maintien de la séparation, à l'instant t₃ (partie c) de la figure 10 la recombinaison des nuages sur les deux capteurs vient de se terminer par l'extinction simultanée de tous les guides d'ondes, et la seconde impulsion *π*/2 peut débuter (une pour chaque capteur).

Enfin, on coupe tous les champs magnétiques pour libérer les atomes et on détecte les populations d'atomes de chaque capteur pour déterminer *φ_{tot_SA}* et *φ_{tot_SB},* puis de calculer l'accélération selon X acx à partir de ( *φ_{tot_SA} - φ_{tot_SB}* ) en éliminant les bais de mesure.

En utilisant la paire de guide selon X (non représentée figure 10) selon un même raisonnement on mesure l'accélération acy selon l'axe Y.

Selon un mode de réalisation la puce atomique présente une structure matricielle dont les pixels définissent des capteurs élémentaires potentiels, un ensemble de deux capteurs (SENA et SENB) comprenant deux pixels de la matrice. Un exemple de topologie de puce matricielle est illustré figure 4, un autre figure 4bis.

Pour la mise en œuvre de l'invention, deux pixels de la matrice sont configurés pour former un ensemble selon l'invention pour la mesure d'une accélération.

Comme différents signaux microonde sont appliqués au deux capteurs SENA et SENB, ils ne peuvent avoir les guides d'onde en commun. Selon un mode de réalisation des ensembles d'un premier et d'un deuxième capteur élémentaires présentent au moins un élément conducteur en commun. Une topologie selon la figure 4bis est préférée dans laquelle SENA et SENB sont choisi dans la matrice afin de partager un même fil conducteur mais pas les même guides d'onde.

Selon un autre aspect l'invention concerne une centrale inertielle comprenant au moins deux capteurs de type accéléromètre selon l'invention configurés pour réaliser une mesure d'accélération respectivement selon deux axes orthogonaux, la puce atomique matricielle comprenant en outre des pixels configurés pour réaliser au moins une mesure d'horloge et des pixels configurés pour réaliser des mesures de vitesses de rotation selon trois axes orthogonaux.

Selon un autre aspect l'invention concerne un procédé de mesure d'une accélération par un capteur inertiel à atomes ultrafroids interférométrique 10 selon l'invention tel que décrit précédemment.

Le procédé comprend, pour chaque capteur, les étapes A à F. Dans une étape A on génère un nuage initial d'atomes ultrafroids associé au premier capteur élémentaire SENA et un nuage initial CLB d'atomes ultrafroids associé au deuxième capteur élémentaire SENB, les nuages initiaux étant localisés près dudit plan XY de la puce. Dans une étape B on génère au voisinage de la puce un champ magnétique homogène Bc. Les étapes A et B peuvent être simultanées. Dans une étape C on génère (pour chaque capteur) un potentiel initial de piégeage Vini du nuage initial d'atomes ultrafroids. Puis pour chaque capteur dans une étape D on initialise un premier état interne et un deuxième état interne par une première impulsion π / 2.

Dans une étape E pour chaque capteur on sépare spatialement le nuage initial en un premier nuage (CL1A pour SENA, CL1B pour SENB) d'atomes ultrafroids dans le premier état interne d'un deuxième nuage (CL2A pour SNA, CL2B pour SNB) d'atomes ultrafroids dans le deuxième état interne, en formant respectivement un premier piège à atomes ultrafroids (T1A pour SENA, T1B pour SENB) et un deuxième piège à atomes ultrafroids (T2A pour SNA, T2B pour SNB). Pour chaque capteur le premier nuage, le deuxième nuage et le point de départ sont alignés selon un axe de mesure.

Pour chaque capteur, on maintient la séparation des premiers et deuxièmes pièges pendant un temps T_{S} puis on recombine les pièges au point de départ, de sorte que les premiers et deuxièmes nuages parcourent respectivement une première trajectoire linéaire (TR1A pour SENA, TR1B pour SENB) et une deuxième trajectoire linéaire (TR2A pour SNA, TR2B pour SNB) à partir du point de départ. Les trajectoires sont parallèles au plan XY de la puce.

Les étapes B à F s'effectuent en appliquant, selon une séquence prédéterminée, un champ magnétique homogène au voisinage de la puce, des courants continus à des éléments conducteurs CEl et des signaux microonde S_{MW} aux guides d'onde.

Afin de pouvoir mesurer une même phase avec un signe opposé l'agencement du groupe d'éléments d'un ou plusieurs éléments conducteurs et la séquence prédéterminée sont en outre configurés pour que les trajectoires (TR1A et TR2A) associées au premier capteur élémentaire et les trajectoires (TR1B et TR2B) associées au deuxième capteur élémentaire soient parallèles entre elles, de même longueur, parcourues simultanément, et de sorte que le sens de départ (c'est-à-dire au départ depuis les points DPA et DPB) des premiers nuages CL1A et CL1B respectivement du premier capteur SENA et du deuxième capteur SENB soient opposés.

Puis dans une étape G on recombine les premiers et deuxièmes états internes en appliquant auxdits atomes ultrafroids une deuxième impulsion π/2. Dans une étape H on mesure au moins une première phase *φ_{tot_SA}* du premier capteur élémentaire et une deuxième phase *φ_{tot_SB}* du deuxième capteur élémentaire, l'accélération étant déterminée à partir de la différence entre la première et la deuxième phase.

Selon un mode de réalisation l'étape C comprend l'application de courants continus dans au moins un élément conducteur.

Selon un mode de réalisation l'étape E et l'étape F comprennent l'application de signaux micro-onde dans une paire de guides d'onde afin de mesurer une accélération selon un axe de mesure perpendiculaire aux guides d'onde de la paire en question.

Selon un mode de réalisation dans l'étape E et l'étape F l'application de signaux micro-onde comprend :
- pour le premier capteur élémentaire SENA l'application d'un signal de fréquence ωₐ dans un des guides d'onde et l'application d'une fréquence ω_{b} dans l'autre guide d'onde,
- pour le deuxième capteur SENB l'application d'un signal de fréquence ω_{b} dans un des guides d'onde et l'application d'une fréquence ωₐ dans l'autre guide d'onde,

Les fréquences ωₐ et ω_{b} sont déterminées à partir des fréquences de résonnance des premier et deuxième états internes.

Pour le capteur SENB le choix de quelle fréquence est à appliquer à quel guide est déterminé pour obtenir l'inversion des sens de départ par rapport à ceux de SNA.

Selon un mode de réalisation, pour diminuer le bruit de mesure, l'étape F comprend une sous étape de coupure de signaux microonde et une sous étape d'application de courants continus aux guides d'onde, à la place des signaux microonde.

## Revendications

1. Capteur inertiel à atomes ultrafroids (10) interférométrique de type accéléromètre comprenant :
- une puce atomique (ACh) placée dans une enceinte à vide, comportant un plan XY dit plan de mesure normal à un axe Z, et comprenant au moins un ensemble d'un premier et un deuxième capteur élémentaire (SENA, SENB), chaque capteur élémentaire comprenant :
∘ au moins une première paire de guides d'ondes (CPWX1, CPWX2) parallèles en eux et au moins une deuxième paire de guides d'ondes (CPWY'1, CPWY'2) parallèles en eux et sécante avec la première paires,
∘ un groupe d'un ou plusieurs éléments conducteurs,
- un dispositif de génération d'atomes (ACG) configuré pour générer un nuage initial d'atomes ultrafroids associé au premier capteur élémentaire (SENA) et un nuage initial (CLB) d'atomes ultrafroids associé au deuxième capteur élémentaire (SENB), lesdits nuages initiaux étant localisés près dudit plan XY de ladite puce,
- un générateur (GB) d'un champ magnétique homogène (Bc),
- un dispositif d'alimentation (PSD) comprenant au moins un générateur microonde (GMW) et au moins un générateur de courant continu (GDC), le dispositif d'alimentation étant configuré pour appliquer des signaux microonde auxdits guides d'ondes et des courants continus auxdits éléments conducteurs,
- le générateur de champ magnétique et le dispositif d'alimentation étant configurés par appliquer le champ magnétique, les courants continus et les signaux microondes selon une séquence prédéterminée,
- un agencement dudit groupe d'un ou plusieurs éléments conducteurs et ladite séquence étant configurés, lors de la mise en œuvre de chaque capteur, pour:
i) Générer un potentiel initial de piégeage dudit nuage initial d'atomes ultrafroids définissant un point de départ,
ii) Séparer spatialement le nuage initial en un premier nuage (CL1A, CL1B) d'atomes ultrafroids dans un premier état interne d'un deuxième nuage (CL2A, CL2B) d'atomes ultrafroids dans un deuxième état interne, en formant respectivement un premier (T1A, T1B) et deuxième (T2A, T2B) pièges à atomes ultrafroids, et de sorte que le premier nuage, le deuxième nuage et le point de départ soient alignés selon un axe de mesure,
iii) Maintenir la séparation desdits premier et deuxième pièges pendant un temps T_{S} puis recombiner lesdits pièges audit point de départ, de sorte que lesdits premier et deuxième nuages parcourent respectivement une première et une deuxième trajectoire linéaire parallèle au plan XY à partir du point de départ,
- l'agencement dudit groupe d'un ou de plusieurs éléments conducteurs de chaque capteur et ladite séquence étant en outre configurés pour que les trajectoires (TR1A, TR2A) associées au premier capteur élémentaire et les trajectoires (TR1B, TR2B) associées au deuxième capteur élémentaire soient parallèles entre elles, de même longueur, parcourues simultanément et de sorte que le sens de départ des premiers nuages, respectivement du premier et du deuxième capteur élémentaire, soient opposés,
- le capteur comprenant en outre un système de détection (SDET) adapté à mesurer au moins une première phase (*φ_{tot_SA}*) du premier capteur élémentaire et une deuxième phase *(φ_{tot_SB}*) du deuxième capteur élémentaire, une accélération étant déterminée à partir d'une différence entre la première et la deuxième phase.

2. Capteur selon la revendication précédente dans lequel le dispositif d'alimentation PSD est en outre configuré pour appliquer des courants continus auxdits guides d'onde.

3. Capteur selon l'une des revendications précédentes dans lequel la première et la deuxième paire de guides d'onde sont perpendiculaires entre elles, et dans lequel le capteur comprend au moins deux ensembles configurés pour réaliser une mesure d'accélération respectivement selon deux axes orthogonaux.

4. Capteur selon l'une des revendications précédentes dans lequel la puce atomique présente une structure matricielle dont les pixels définissent des capteurs élémentaires potentiels, un ensemble comprenant deux pixels de la matrice.

5. Capteur selon la revendication précédente dans lequel des ensembles d'un premier et d'un deuxième capteur élémentaire présentent au moins un élément conducteur en commun.

6. Centrale inertielle comprenant au moins deux capteurs de type accéléromètre selon l'une des revendications 3 à 5 configurés pour réaliser une mesure d'accélération respectivement selon deux axes orthogonaux, la puce atomique matricielle comprenant en outre des pixels configurés pour réaliser au moins une mesure d'horloge et des pixels configurés pour réaliser des mesures de vitesses de rotation selon trois axes orthogonaux.

7. Procédé de mesure d'une accélération par un capteur inertiel à atomes ultrafroids (10) interférométrique comprenant une puce atomique (ACh) placée dans une enceinte à vide, comportant un plan XY dit plan de mesure normal à un axe Z, et comprenant au moins un ensemble d'un premier et un deuxième capteur élémentaire (SENA, SENB), chaque capteur élémentaire comprenant :
∘ au moins une première paire de guides d'ondes (CPWX1, CPWX2) parallèles en eux et au moins une deuxième paire de guides d'ondes (CPWY'1, CPWY'2) parallèles en eux et sécante avec la première paires,
∘ un groupe d'un ou plusieurs éléments conducteurs,
le procédé comprenant les étapes consistant à :
A. Générer un nuage initial d'atomes ultrafroids associé au premier capteur élémentaire (SENA) et un nuage initial (CLB) d'atomes ultrafroids associé au deuxième capteur élémentaire (SENB), lesdits nuages initiaux étant localisés près dudit plan XY de ladite puce,
B. Générer un champ magnétique homogène,
C. Pour chaque capteur générer un potentiel initial de piégeage (Vini) dudit nuage initial d'atomes ultrafroids,
D. Pour chaque capteur initialiser un premier état interne et un deuxième état interne par une première impulsion π / 2,
E. Pour chaque capteur séparer spatialement le nuage initial en un premier nuage (CL1A, CL1B) d'atomes ultrafroids dans le premier état interne d'un deuxième nuage (CL2A, CL2B) d'atomes ultrafroids dans le deuxième état interne, en formant respectivement un premier (T1A, T1B) et deuxième (T2A, T2B) pièges à atomes ultrafroids, et de sorte que le premier nuage, le deuxième nuage et le point de départ soient alignés selon un axe de mesure,
F. Pour chaque capteur, maintenir la séparation desdits premier et deuxième pièges pendant un temps Ts puis recombiner lesdits pièges audit point de départ, de sorte que les dits premiers et deuxièmes nuages parcourent respectivement une première et une deuxième trajectoire linéaire parallèle à XY à partir du point de départ,
les étapes B à F s'effectuant en appliquant, selon une séquence prédéterminée, un champs magnétique homogène, des courants continus auxdits éléments conducteurs et des signaux microonde (I_{MW}) auxdits guides d'onde,
l'agencement dudit groupe d'éléments d'un ou plusieurs éléments conducteurs et ladite séquence prédéterminée étant en outre configurés pour que les trajectoires (TR1A, TR2A) associées au premier capteur élémentaire et les trajectoires (TR1B, TR2B) associées au deuxième capteur élémentaire soient parallèles entre elles, de même longueur, parcourues simultanément, et de sorte que le sens de départ des premiers nuages, respectivement du premier et du deuxième capteur, soient opposés,
G. Recombiner lesdits premier et deuxième états internes en appliquant auxdits atomes ultrafroids une deuxième impulsion π/2,
H. Mesurer au moins une première phase (*φ*_{*tot*_*SA*}) du premier capteur élémentaire et une deuxième phase (*φ_{tot_SB}*) du deuxième capteur élémentaire, une accélération étant déterminée à partir d'une différence entre la première et la deuxième phase.

8. Procédé selon la revendication précédente dans lequel l'étape C comprend l'application de courants continus dans au moins un élément conducteur.

9. Procédé selon l'une des revendications 7 ou 8 dans lequel l'étape E et l'étape F comprennent l'application de signaux micro-onde dans une paire de guides d'onde afin de mesurer une accélération selon un axe de mesure perpendiculaire aux guides d'onde de ladite paire.

10. Procédé selon la revendication précédente dans lequel dans l'étape E et l'étape F l'application de signaux micro-onde comprend :
- pour le premier capteur élémentaire l'application d'un signal de fréquence ωₐ dans un des guides d'onde et l'application d'une fréquence ω_{b} dans l'autre guide d'onde,
- pour le deuxième capteur l'application d'un signal de fréquence ω_{b} dans un des guides d'onde et l'application d'une fréquence ωₐ dans l'autre guide d'onde,
lesdites fréquences ωₐ et ω_{b} étant déterminées à partir des fréquences de résonnance desdits premier et deuxième états internes.

11. Procédé selon l'une des revendications 6 à 10 dans lequel l'étape F comprend une sous étape de coupure des signaux microonde et une sous étape d'application de courants continus auxdits guides d'onde.

## Patentansprüche

1. Interferometrischer Inertial-Ultrakaltatomsensor (10) des Beschleunigungstyps, umfassend:
- ein Atomchip (ACh), das in einem Hohlraum platziert ist, der eine als Messebene bezeichnete XY-Ebene umfasst, die normal zu einer Z-Achse ist, und das mindestens eine Montage aus einem ersten und einem zweiten Elementarsensor (SENA, SENB) umfasst, wobei jeder Elementarsensor Folgendes umfasst:
- mindestens ein erstes Paar Wellenleiter (CPWX1, CPWX2), die parallel zueinander sind, und mindestens ein zweites Paar Wellenleiter (CPWY'1, CPWY'2), die parallel zueinander sind und das erste Paar schneiden,
- eine Gruppe aus einem oder mehreren leitfähigen Elementen,
- eine Atomerzeugungsvorrichtung (ACG), die konfiguriert ist, um eine dem ersten Elementarsensor (SENA) zugeordnete Anfangswolke ultrakalter Atome und eine dem zweiten Elementarsensor (SENB) zugeordnete Anfangswolke (CLB) ultrakalter Atome zu erzeugen, wobei sich die Anfangswolken in der Nähe der XY-Ebene des Chips befinden,
- einen Generator (GB) eines homogenen Magnetfeldes (Bc),
eine Versorgungsvorrichtung (PSD), die mindestens einen Mikrowellengenerator (GMW) und mindestens einen Gleichstromgenerator (GDC) umfasst, wobei die Versorgungsvorrichtung konfiguriert ist, um Mikrowellensignale an den Wellenleitern und Gleichströme an den leitfähigen Elementen anzulegen,
- wobei der Magnetfeldgenerator und die Versorgungsvorrichtung konfiguriert sind, um das Magnetfeld, die Gleichströme und die Mikrowellensignale gemäß einer vorbestimmten Reihenfolge anzulegen,
- wobei eine Anordnung der Gruppe aus einem oder mehreren leitfähigen Elementen und die Reihenfolge konfiguriert sind, um beim Einsatz jedes Sensors:
i) ein Anfangseinfangpotenzial der Anfangswolke ultrakalter Atome zu erzeugen, das einen Ausgangspunkt definiert,
ii) die Anfangswolke in eine erste Wolke (CL1A, CL1B) ultrakalter Atome in einem ersten inneren Zustand von einer zweiten Wolke (CL2A, CL2B) ultrakalter Atome in einem zweiten inneren Zustand räumlich zu trennen, indem jeweils eine erste (T1A, T1B) und eine zweite (T2A, T2B) Falle für ultrakalte Atome gebildet werden, und derart, dass die erste Wolke, die zweite Wolke und der Ausgangspunkt auf einer Messachse ausgerichtet werden,
iii) die Trennung der ersten und zweiten Falle während einer Zeit T_{S} aufrechtzuerhalten, dann die Fallen am Ausgangspunkt derart neu zu kombinieren, dass die erste und die zweite Wolke jeweils einen ersten und einen zweiten linearen Weg parallel zur XY-Ebene ausgehend vom Ausgangspunkt zurücklegen,
- die Anordnung der Gruppe aus einem oder mehreren leitfähigen Elementen jedes Sensors und die vorbestimmte Reihenfolge weiter so konfiguriert sind, dass der dem ersten Elementarsensor (TR1A, TR2A) zugeordnete Weg und der dem zweiten Elementarsensor (TR1B, TR2B) zugeordnete Weg parallel zueinander sind, gleich lang sind, gleichzeitig zurückgelegt werden, und derart, dass die Ausgangsrichtung der ersten Wolken, des ersten und des zweiten Sensors jeweils entgegengesetzt sind,
- wobei der Sensor weiter ein Erfassungssystem (SDET) umfasst, das angepasst ist, um mindestens eine erste Phase (*φ_{tot_SA}*) des ersten Elementarsensors und eine zweite Phase (*φ_{tot_SB}*) des zweiten Elementarsensors zu messen, wobei eine Beschleunigung ausgehend von einer Differenz zwischen der ersten und der zweiten Phase bestimmt wird.

2. Sensor nach dem vorstehenden Anspruch, wobei die Versorgungsvorrichtung PSD weiter konfiguriert ist, um Gleichströme an den Wellenleitern anzulegen.

3. Sensor nach dem vorstehenden Anspruch, wobei das erste und das zweite Paar von Wellenleitern senkrecht zueinander sind und wobei der Sensor mindestens zwei Montagen umfasst, die konfiguriert sind, um jeweils eine Beschleunigungsmessung entlang von zwei orthogonalen Achsen durchzuführen.

4. Sensor nach einem der vorstehenden Ansprüche, wobei das Atomchip eine Matrixstruktur aufweist, bei der die Pixel potenzielle Elementarsensoren definieren, wobei eine Montage zwei Pixel der Matrix umfasst.

5. Sensor nach dem vorstehenden Anspruch, wobei Montagen aus einem ersten und einem zweiten Elementarsensor mindestens ein gemeinsames leitfähiges Element aufweisen.

6. Inertial-Zentrale, umfassend mindestens zwei Sensoren des Beschleunigungstyps nach einem der Ansprüche 3 bis 5, die konfiguriert sind, um jeweils eine Beschleunigungsmessung entlang von zwei orthogonalen Achsen durchzuführen, wobei das Matrizen-Atomchip weiter Pixel umfasst, die konfiguriert sind, um mindestens eine Uhrzeitmessung durchzuführen, und Pixel, die konfiguriert sind, um Drehgeschwindigkeitsmessungen entlang von drei orthogonalen Achsen durchzuführen.

7. Verfahren zum Messen einer Beschleunigung durch einen interferometrischen Inertial-Ultrakaltatomsensor (10), der ein Atomchip (ACh) umfasst, das in einem Hohlraum platziert ist, der eine als Messebene bezeichnete XY-Ebene umfasst, die normal zu einer Z-Achse ist, und das mindestens eine Montage aus einem ersten und einem zweiten Elementarsensor (SENA, SENB) umfasst, wobei jeder Elementarsensor Folgendes umfasst:
- mindestens ein erstes Paar Wellenleiter (CPWX1, CPWX2), die parallel zueinander sind, und mindestens ein zweites Paar Wellenleiter (CPWY'1, CPWY'2), die parallel zueinander sind und das erste Paar schneiden,
- eine Gruppe aus einem oder mehreren leitfähigen Elementen,
wobei das Verfahren die Schritte umfasst, die aus Folgendem bestehen:
A. Erzeugen einer dem ersten Elementarsensor (SENA) zugeordneten Anfangswolke (CLB) ultrakalter Atome und einer dem zweiten Elementarsensor (SENB) zugeordneten Anfangswolke ultrakalter Atome, wobei sich die Anfangswolken in der Nähe der XY-Ebene des Chips befinden,
B. Erzeugen eines homogenen Magnetfeldes,
C. für jeden Sensor, Erzeugen eines Anfangseinfangpotenzials (Vini) der Anfangswolke ultrakalter Atome,
D. für jeden Sensor, Initialisieren eines ersten inneren Zustands und eines zweiten inneren Zustands durch einen ersten Impuls π / 2,
E. für jeden Sensor, räumliches Trennen der Anfangswolke in eine erste Wolke (CL1A, CL1B) ultrakalter Atome in einem ersten inneren Zustand von einer zweiten Wolke (CL2A, CL2B) ultrakalter Atome in einem zweiten inneren Zustand, indem jeweils eine erste (T1A, T1B) und eine zweite (T2A, T2B) Falle für ultrakalte Atome gebildet werden, und derart, dass die erste Wolke, die zweite Wolke und der Ausgangspunkt auf einer Messachse ausgerichtet werden,
F. für jeden Sensor, Aufrechterhalten der Trennung der ersten und zweiten Falle während einer Zeit T, dann erneutes Kombinieren der Fallen am Ausgangspunkt derart, dass die erste und die zweite Wolke jeweils einen ersten und einen zweiten linearen Weg parallel zu XY ausgehend vom Ausgangspunkt zurücklegen,
wobei die Schritte B bis F durchgeführt werden, indem gemäß einer vorbestimmten Reihenfolge ein homogenes Magnetfeld, Gleichströme an den leitfähigen Elementen und Mikrowellensignale (I_{MW}) an den Wellenleitern angelegt werden,
wobei die Anordnung der Gruppe von Elementen aus einem oder mehreren leitfähigen Elementen und die vorbestimmte Reihenfolge weiter so konfiguriert sind, dass der dem ersten Elementarsensor (TR1A, TR2A) zugeordnete Weg und der dem zweiten Elementarsensor (TR1B, TR2B) zugeordnete Weg parallel zueinander sind, gleich lang sind, gleichzeitig zurückgelegt werden, und derart, dass die Ausgangsrichtung der ersten Wolken, des ersten und zweiten Sensors jeweils entgegengesetzt sind,
G. erneutes Kombinieren des ersten und zweiten inneren Zustands durch Anlegen eines zweiten Impulses π/2 an den ultrakalten Atomen,
H. Messen mindestens einer ersten Phase (*φ_{tot_SA}*) des ersten Elementarsensors und einer zweiten Phase (*φ_{tot_SB}*) des zweiten Elementarsensors, wobei eine Beschleunigung ausgehend von einer Differenz zwischen der ersten und der zweiten Phase bestimmt wird.

8. Verfahren nach dem vorstehenden Anspruch, wobei der Schritt C das Anlegen von Gleichströmen an mindestens ein leitfähiges Element umfasst.

9. Verfahren nach einem der Ansprüche 7 oder 8, wobei der Schritt E und der Schritt F das Anlegen von Mikrowellensignalen an ein Paar von Wellenleitern umfasst, um eine Beschleunigung entlang einer Messachse senkrecht zu den Wellenleitern des Paars zu messen.

10. Verfahren nach dem vorstehenden Anspruch, wobei im Schritt E und der Schritt F das Anlegen von Mikrowellensignalen Folgendes umfasst:
- für den ersten Elementarsensor, das Anlegen eines Signals mit Frequenz ωₐ an einen der Wellenleiter und das Anlegen einer Frequenz ω_{b} an den anderen Wellenleiter,
- für den zweiten Elementarsensor, das Anlegen eines Signals mit Frequenz ω_{b}an einen der Wellenleiter und das Anlegen einer Frequenz ωₐ an den anderen Wellenleiter,
wobei die Frequenzen ωₐ und ω_{b} ausgehend von den Resonanzfrequenzen des ersten und zweiten inneren Zustands bestimmt werden.

11. Verfahren nach einem der Ansprüche 6 bis 10, wobei der Schritt F einen Teilschritt des Unterbrechens der Mikrowellensignale und einen Teilschritt des Anlegens von Gleichströmen an die Wellenleiter umfasst.

## Claims

1. An accelerometer-type interferometric ultracold atom inertial sensor (10) comprising:
- an atom chip (ACh) placed in a vacuum cabinet, comprising an XY-plane, called the measurement plane, normal to a Z-axis, and comprising at least one arrangement of a first and a second elementary sensor (SENA, SENB), with each elementary sensor comprising:
- at least one first pair of waveguides (CPWX 1, CPWX 2) parallel to each other and at least one second pair of waveguides (CPWY'1, CPWY'2) parallel to each other and intersecting with the first pair;
- a group of one or more conductive elements;
- an atom generation device (ACG) configured to generate an initial cloud of ultracold atoms associated with the first elementary sensor (SENA) and an initial cloud (CLB) of ultracold atoms associated with the second elementary sensor (SENB), with said initial clouds being located close to said XY-plane of said chip;
- a generator (GB) for generating a uniform magnetic field (Bc);
- a power supply device (PSD) comprising at least one microwave generator (GMW) and at least one direct current generator (GDC), the power supply device being configured to apply microwave signals to said waveguides and direct currents to said conductive elements;
- the magnetic field generator and the power supply device being configured to apply the magnetic field, the direct currents and the microwave signals in a predetermined sequence;
- with an arrangement of said group of one or more conductive elements and said sequence being configured, when each sensor is implemented, to:
i) generate an initial potential for trapping said initial cloud of ultracold atoms defining a departure point;
ii) spatially separate the initial cloud into a first cloud (CL1A, CL1B) of ultracold atoms in a first internal state and a second cloud (CL2A, CL2B) of ultracold atoms in a second internal state, by respectively forming a first (T1A, T1B) and second (T2A, T2B) ultracold atom trap, and such that the first cloud, the second cloud and the departure point are aligned along a measurement axis;
iii) maintain the separation of said first and second traps for a time T_{S}, and then recombine said traps at said departure point, such that said first and second clouds respectively cover a first and a second linear trajectory parallel to the XY-plane from the departure point;
- with the arrangement of said group of one or more conductive elements of each sensor and said sequence being further configured so that the trajectories (TR1A, TR2A) associated with the first elementary sensor and the trajectories (TR1B, TR2B) associated with the second elementary sensor are parallel to each other, are of the same length, are covered simultaneously and so that the departure direction of the first clouds, from the first and the second elementary sensor respectively, are opposite;
- the sensor further comprising a detection system (SDET) suitable for measuring at least a first phase (*φ_{tot_SA}*) of the first elementary sensor and a second phase (*φ*_{*tot*_*SB*}) of the second elementary sensor, with an acceleration being determined from a difference between the first and the second phase.

2. The sensor according to the preceding claim, wherein the power supply device PSD is further configured to apply direct currents to said waveguides.

3. The sensor according to any one of the preceding claims, wherein the first and the second pair of waveguides are perpendicular to each other, and wherein the sensor comprises at least two arrangements configured to respectively carry out an acceleration measurement along two orthogonal axes.

4. The sensor according to any one of the preceding claims, wherein the atom chip has a matrix structure, the pixels of which define potential elementary sensors, with an arrangement comprising two pixels of the matrix.

5. The sensor according to the preceding claim, wherein arrangements of a first and a second elementary sensor have at least one conductive element in common.

6. An inertial unit comprising at least two accelerometer-type sensors according to any one of claims 3 to 5 configured to respectively carry out an acceleration measurement along two orthogonal axes, with the matrix atom chip further comprising pixels configured to carry out at least one clock measurement and pixels configured to carry out rotation speed measurements along three orthogonal axes.

7. A method for measuring acceleration using an interferometric ultracold atom inertial sensor (10) comprising an atom chip (ACh) placed in a vacuum cabinet, comprising an XY-plane, called the measurement plane, normal to a Z-axis, and comprising at least one arrangement of a first and a second elementary sensor (SENA, SENB), with each elementary sensor comprising:
- at least one first pair of waveguides (CPWX 1, CPWX 2) parallel to each other and at least one second pair of waveguides (CPWY'1, CPWY'2) parallel to each other and intersecting with the first pair;
- a group of one or more conductive elements;
the method comprising the steps of:
A. generating an initial cloud of ultracold atoms associated with the first elementary sensor (SENA) and an initial cloud (CLB) of ultracold atoms associated with the second elementary sensor (SENB), with said initial clouds being located close to said XY-plane of said chip;
B. generating a uniform magnetic field;
C. generating, for each sensor, an initial potential (Vini) for trapping said initial cloud of ultracold atoms;
D. initializing, for each sensor, a first internal state and a second internal state via a first pulse π/2;
E. spatially separating, for each sensor, the initial cloud into a first cloud (CL1A, CL1B) of ultracold atoms in the first internal state and a second cloud (CL2A, CL2B) of ultracold atoms in the second internal state, by respectively forming a first (T1A, T1B) and second (T2A, T2B) ultracold atom trap, and such that the first cloud, the second cloud and the departure point are aligned along a measurement axis;
F. maintaining, for each sensor, the separation of said first and second traps for a time Tₛ, and then recombining said traps at said departure point, such that said first and second clouds respectively cover a first and a second linear trajectory parallel to the XY-plane from the departure point;
with steps B to F being carried out by applying, in a predetermined sequence, a uniform magnetic field, as well as direct currents to said conductive elements and microwave signals (I_{MW}) to said waveguides;
with the arrangement of said group of one or more conductive elements and said predetermined sequence being further configured so that the trajectories (TR1A, TR2A) associated with the first elementary sensor and the trajectories (TR1B, TR2B) associated with the second elementary sensor are parallel to each other, are of the same length, are covered simultaneously and so that the departure direction of the first clouds, from the first and the second sensor respectively, are opposite;
G. recombining said first and second internal states by applying a second pulse π/2 to said ultracold atoms;
H. measuring at least a first phase (*φ_{tot_SA}*) of the first elementary sensor and a second phase (*φ*_{*tot*_*SB*}) of the second elementary sensor, with an acceleration being determined from a difference between the first and the second phase.

8. The method according to the preceding claim, wherein step C comprises applying direct currents in at least one conductive element.

9. The method according to any one of claims 7 or 8, wherein step E and step F comprise applying microwave signals in a pair of waveguides in order to measure an acceleration along a measurement axis perpendicular to the waveguides of said pair.

10. The method according to the preceding claim, wherein in step E and step F applying microwave signals comprises:
- for the first elementary sensor, applying a signal of frequency ωₐ in one of the waveguides and applying a frequency *ω_{b}* in the other waveguide;
- for the second sensor, applying a signal of frequency *ω_{b}* in one of the waveguides and applying a frequency *ωₐ* in the other waveguide;
with said frequencies *ωₐ* and *ω_{b}* being determined from the resonant frequencies of said first and second internal states.

11. The method according to any one of claims 6 to 10, wherein step F comprises a sub-step of cutting off the microwave signals and a sub-step of applying direct currents to said waveguides.
